# FASCICULE DE BREVET EUROPEEN

(11) **EP 1 254 034 B1**
(45) Date de publication et mention de la délivrance du brevet: **03.08.2005**
(21) Numéro de dépôt: 00993248.4
(22) Date de dépôt: 30.11.2000
(51) Int. Cl.: B60C 15/024

(54) **BOURRELET POUR PNEUMATIQUE A MOBILITE ETENDUE**
REIFENWULST MIT VERLÄNGERTER MOBILITÄT
TYRE BEAD WITH EXTENDED MOBILITY

(30) Priorité: 03.12.1999 FR 9915366
(43) Date de publication de la demande: 06.11.2002
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: COSTA PEREIRA, Pedro, F-63000 Clermont-Ferrand (FR); GUERINON, Bernard, F-63100 Clermont-Ferrand (FR)
(74) Mandataire: Dequire, Philippe
(86) Numéro de dépôt international: PCT/EP2000/012060
(87) Numéro de publication internationale: WO 2001/039999

(56) Documents cités:
- EP-A- 0 582 196
- EP-A- 0 748 287
- EP-B- 0 673 324
- WO-A-99/25572
- WO-A-99/64225
- GB-A- 2 061 199

## Description

La présente invention concerne un pneumatique pour roue de véhicule dans lequel au moins un des bourrelets comporte un siège avec une génératrice dont l'extrémité axialement intérieure est sur un cercle de diamètre supérieur au diamètre du cercle sur lequel se trouve l'extrémité axialement extérieure. Ce type de conception est particulièrement adapté aux nouvelles générations de pneumatiques pouvant être utilisés, dans certaines limites, dans des conditions de faible pression, voire de pression nulle ou quasi-nulle, avec une élimination du risque de désolidarisation du pneu de la jante sur laquelle il est monté. Ce concept est souvent désigné par l'expression "mobilité étendue".

Depuis longtemps les fabricants de pneumatiques tentent de mettre au point un pneumatique ne créant aucune source de risque ou de danger potentiel lors d'un abaissement anormal, voire d'une perte totale de pression. Une des difficultés rencontrées concerne le roulage à plat ou à très faible pression. En effet, lors d'un roulage à très faible pression, voire à pression nulle avec des pneumatiques classiques, les bourrelets risquent fortement de se désolidariser du pourtour de la jante contre lequel ils étaient maintenus par la pression. De nombreuses solutions ont été testées afin de pallier ces inconvénients. Souvent ces solutions engendrent des difficultés supplémentaires au niveau du montage et du démontage du pneu sur la jante.

Le document EP 0 582 196 présente un pneumatique comportant une bande de roulement prolongée par deux flancs et deux bourrelets ainsi qu'une carcasse ancrée dans les deux bourrelets à un renforcement annulaire. La carcasse est constituée de fils disposés de façon adjacente, alignés circonférentiellement et en contact avec au moins une couche de gomme de liaison de très haut module d'élasticité dans la zone d'accrochage du bourrelet comprenant le renforcement annulaire. Dans ce pneumatique, le renforcement annulaire de la zone d'accrochage du bourrelet est constitué de piles de fils circonférentiels avec interposition entre les fils de renforcement de la carcasse et ces piles d'une couche de gomme de liaison de très haut module d'élasticité.

Ce mode de réalisation est destiné aux pneumatiques de type classique, avec maintien des bourrelets contre le crochet de jante dû à la pression de gonflage du pneumatique. On retrouve dans ce type d'agencement une prédominance d'efforts de type latéral ou axial, induisant d'importantes forces de compression agissant sensiblement axialement depuis les parois vers le centre dudit bourrelet. Ces forces augmentent en fonction de la pression de gonflage. L'augmentation de la pression tend à faire glisser le bourrelet contre le crochet, radialement vers l'extérieur. Les efforts induits radialement vers l'intérieur, contre le siège de la jante , diminuent avec l'augmentation de la pression, ou avec toute augmentation de la tension de la structure de renfort de type carcasse.

On remarque par ailleurs que les piles de fils sont alignées dans un sens sensiblement parallèle à l'orientation du profil du crochet de jante contre lequel le bourrelet s'appuie.

Le profil du bourrelet de ce type de pneumatique est relativement étroit et allongé; l'ancrage est réparti sur l'essentiel de la hauteur et de la largeur du bourrelet. Le passage de la carcasse dans le bourrelet est généralement sensiblement central par rapport aux parois dudit bourrelet.

Par ailleurs, s'agissant d'un bourrelet relativement étroit sujet à des efforts à prédominance axiale, ni la pression de gonflage, ni la tension induite dans la carcasse ne permettent la génération d'important moments ou couples, tendant à faire pivoter ou tourner le bourrelet sur lui-même.

Avec un tel type de pneumatique, si la pression chute et que le roulage se poursuit, le maintien du pneumatique sur la jante n'est plus assuré, et dans la plupart des cas, il se produit un déjantage.

Le document EP 0 673 324 décrit un ensemble roulant comprenant au moins un pneumatique, selon le preambule de la revendication 1, a armature de carcasse radiale ancrée dans chaque bourrelet et une jante de conformation particulière. Cette jante comporte un premier siège avec une génératrice telle que l'extrémité axialement extérieure de ladite génératrice est distante de l'axe de rotation d'une longueur inférieure à la distance séparant son extrémité axialement intérieure et est délimitée axialement à l'extérieur par une saillie ou rebord de jante. Le pneumatique comporte des sièges de bourrelets adaptés pour un montage sur cette jante. Le type d'interface pneumatique/jante proposé dans ce document présente de nombreux avantages par rapport aux solutions déjà connues, notamment au niveau de la facilité de montage/démontage tout en permettant d'effectuer un certain parcours malgré une chute de pression.

La présente invention vise notamment à proposer certains types d'architectures afin d'optimiser les qualités de l'ensemble proposé dans le document cité ci-haut.

Le document EP 0 748 287 décrit une solution permettant une première optimisation de la technologie de base décrite dans le document EP 0 673 324 préalablement cité. Il s'agit d'un pneumatique dont au moins un bourrelet a une structure permettant de modifier le serrage dudit bourrelet en fonction de la tension de l'armature de carcasse et notamment un renforcement de celui-ci lorsque la pression de gonflage s'accroît jusqu'à sa valeur nominale. Le document propose ainsi l'utilisation d'un bourrelet avec ancrage de l'extrémité de la carcasse par retournement de celle-ci autour de la base de la tringle, par les cotés axialement et radialement intérieurs par rapport à la tringle. Le bourrelet comporte également, adjacent à la tringle et axialement à l'extérieur de celle-ci, un profilé de mélange caoutchouteux de dureté relativement élevée contre lequel la tringle peut venir exercer une force de compression lors d'un accroissement de tension de l'armature de carcasse. Cette force de compression crée un auto-serrage de la pointe du bourrelet sur la jante de montage. La tension de la carcasse entraîne donc un déplacement de la tringle vers l'extérieur, afin que cette dernière génère ladite force de compression. Dans une telle configuration, la présence d'une tringle de type classique et le retournement de la carcasse sous cette dernière sont présentées comme étant indispensables pour générer la force de compression. Ceci limite les possibilités d'envisager d'autres types d'agencement.

D'autre part, le document EP 0 922 592, décrit deux modes de réalisations avec ancrage de la carcasse par retournement de celle-ci axialement vers l'extérieur.

Le premier mode propose un ancrage de la carcasse dans le bourrelet par retournement radialement vers l'extérieur de l'extrémité de la carcasse. Le retournement est entouré de part et d'autre par deux couches radialement superposées de fils métalliques disposés axialement côte à côte et couvrant sensiblement toute la portion axiale le long du siège du bourrelet. Les couches sont agencées de façon à être parallèles au siège. Les types de fils ainsi que les dimensions correspondantes sont très précises.

La seconde solution proposée dans ce document concerne des sièges de bourrelets avec des diamètres différents. L'arrimage de la carcasse s'effectue également de façon différente par rapport à la première solution. Tout d'abord, la carcasse se subdivise en deux portions radialement séparées au niveau du bourrelet. Chaque portion est adjointe d'une couche de fils disposée radialement, chaque couche étant disposée radialement extérieurement contre chacune des portions de carcasse. La portion de carcasse radialement extérieure et la couche de fils radialement à l'intérieur sont séparées par un insert de type élastomère à dureté élevée prévu dans le bourrelet. Cet insert garnit axialement la portion centrale du bourrelet et remonte radialement vers l'extérieur et axialement vers l'intérieur, au-delà de la limite radiale de présence des fils métalliques.

Les deux exemples de solutions du document EP 0 922 592 comportent plusieurs inconvénients. Ainsi, l'arrimage de la carcasse proposé dans ce document nécessite la présence d'un retournement axialement vers l'extérieur de la portion d'extrémité de la carcasse. D'autre part, les couches de fils superposées sont disposées radialement près du siège du bourrelet, en bonne partie à une position radiale plus près de l'axe de rotation que la portion haute du rebord sur lequel le bourrelet appuie. A moins d'utiliser des fils fortement extensibles, le montage/démontage du pneumatique est difficile à exécuter, dû à la position radiale défavorable des fils. On remarque également que les piles sont orientées de façon sensiblement parallèle au profil du siège contre lequel le bourrelet appuie.

Le document WO 99/64225, publié le 16.12.1999 suite à un dépôt le 27.05.1999, décrit un pneumatique ayant des bourrelets, dont le siège a une generatrice dont l'extrémité axialement intérieure est sur un cercle de diamètre supérieur à celui de l'extrémité axialement extérieure, doté d'un ancrage carcasse particlier.

Selon la seconde solution, la carcasse se subdivise en deux portions et un insert à dureté élevé est nécessaire pour séparer d'une part les couches de fils et d'autre part les deux portions de carcasse. L'ancrage de la carcasse n'est cependant pas réalisé dans l'insert. La forme de l'insert décrit est limitative.

La présente invention propose donc de pallier les différents inconvénients inhérents aux solutions exposées ci-dessus.

Pour ce faire, elle prévoit un pneumatique pour roue de véhicule, selon la revendication 1.

Une zone d'interface est avantageusement constituée par une portion de la structure de renfort et au moins une pile, ladite zone étant sensiblement noyée dans un mélange de gomme à haut module. De manière avantageuse, ladite zone d'interface englobe généralement les piles et la portion de structure de renfort adjacente.

Un tel agencement, notamment au niveau du bourrelet, permet une très grande souplesse dans les délimitations des différentes zones comportant des mélanges de natures et/ou de caractéristiques différentes. Il en est de même pour les piles qui peuvent être configurées selon une multiplicité de configurations. En tenant compte de ces deux aspects, il est possible d'optimiser la conception et la fabrication des pneumatiques, en fonction du type de véhicule pour lequel le pneumatique est prévu et des contraintes d'utilisation associées. Il est également possible de prévoir des agencements plus appropriés facilitant certains types de fabrications automatisées par exemple avec assemblage sur noyau central et/ou sans utilisation de produits semi-finis. On peut ainsi concevoir un pneumatique pour un véhicule donné pouvant être fabriqué à un moindre coût.

L'ancrage de la structure de renfort dans le bourrelet est assuré, malgré l'absence d'une tringle de type classique autour de laquelle la carcasse est habituellement retournée afin de créer un lien d'ancrage fiable. Ce type d'architecture est également avantageux en raison de sa compacité et présente une facilité de montage/démontage. En outre, le traditionnel retournement de carcasse que l'on retrouve dans les bourrelets de types connus, comportant un siège avec une génératrice dont l'extrémité axialement intérieure est sur un cercle de diamètre supérieur au diamètre du cercle sur lequel se trouve l'extrémité axialement extérieure, peut être supprimé, sans pour autant sacrifier l'intégrité, la solidité ou l'endurance de l'assemblage. Cet aspect contribue à la simplification de la fabrication tout en offrant une latitude de configurations très vaste.

La suppression du retournement est rendue possible par l'utilisation de mélanges à haut module dans la zone d'interface en contact direct avec la structure de renfort de type carcasse dans la zone d'ancrage. Dans le pneumatique classique, les carcasses sont en contact intime avec des mélanges de bas ou très bas module. Cela implique des longueurs importantes pour transmettre les efforts à la tringle.

Selon un mode de fabrication particulièrement avantageux où les différents constituants du pneumatique sont disposés directement sur un noyau central dont la forme confère au pneumatique en cours de fabrication une forme sensiblement similaire à la forme du produit fini, la suppression du retournement (qui existe avec une architecture traditionnelle) permet une simplification avantageuse de la fabrication.

La structure de renfort des flancs et du sommet est avantageusement de type carcasse, ses propriétés mécaniques s'apparentant à celles des nappes carcasses de type connu. Par ailleurs, cette structure de renfort est avantageusement configurée sans séparation axiale au niveau du bourrelet. Ainsi, tous les fils de l'agencement circonférentiel occupent de préférence une position axiale sensiblement identique.

De manière préférentielle, au moins un rebord externe d'un bourrelet est agencé de façon à se prolonger sensiblement axialement et radialement vers l'extérieur depuis l'extrémité axialement extérieure du siège du bourrelet. Par exemple, le rebord externe, axialement extérieur au siège, comporte une génératrice sensiblement rectiligne inclinée radialement extérieurement par rapport à l'axe de rotation du pneumatique d'un angle compris entre 30° et 85°, mesuré depuis cet axe.

Un tel rebord est normalement utilisé de paire avec une jante comportant un rebord de jante, couramment désigné "side", également agencé de façon à se prolonger sensiblement axialement et radialement vers l'extérieur depuis l'extrémité axialement extérieure du siège de la jante. Ce rebord est susceptible de servir de zone d'appui lorsque le bourrelet subi un effort tendant à le repousser radialement vers l'extérieur. Ceci peut être le cas par exemple lorsque le phénomène de rotation du bourrelet intervient ou encore sous l'influence de l'effort induit lors d'un virage prononcé. Le rebord contribue au bon maintien du bourrelet et donc du pneumatique sur la jante, notamment en évitant tout débordement axialement vers l'extérieur.

Selon une forme d'exécution avantageuse de l'invention, les bases des piles (les fils radialement les plus près de l'axe de rotation du pneumatique) sont disposées radialement plus à l'extérieur que l'extrémité dudit rebord (portion axialement et radialement la plus à l'extérieur dudit rebord). Les bases des piles sont avantageusement prévues de façon à être disposées radialement extérieurement par rapport au rebord de la jante adaptée au pneumatique. Les opérations de montage/démontage sont alors facilitées.

De manière avantageuse, la structure de renfort de type carcasse s'étend sensiblement radialement depuis chacun des bourrelets, le long des flancs, vers la zone sommet. Ladite structure peut ainsi être unitaire et s'étendre d'un bourrelet à l'autre, ou encore être partagée en deux demi-structures, s'étendant chacune le long d'un seul flanc.

Selon une variante avantageuse ledit arrangement sensiblement radial de fils circonférentiels est disposé en au moins une pile, la totalité des piles étant disposée du côté axialement externe par rapport à la structure de type carcasse.

Selon une autre variante avantageuse, ledit arrangement sensiblement radial de fils circonférentiels est disposé en au moins une pile, la totalité des piles étant disposée du côté axialement interne par rapport à la structure de type carcasse.

Selon une autre variante avantageuse, ledit arrangement sensiblement radial de fils circonférentiels est disposé en au moins deux piles, les piles étant disposées de part et d'autre par rapport à la structure de type carcasse.

Le nombre de piles ainsi que le nombre d'enroulements ou de spires de chacune des piles est avantageusement établi en fonction des caractéristiques recherchées pour le pneumatique, par exemple sa pression de service. Par exemple, un nombre de piles plus élevé peut être souhaité afin d'augmenter la rigidité au niveau de la zone du bourrelet.

La structure de renfort est de préférence constituée d'un enroulement filaire faisant des aller-retours entre les deux bourrelets en formant dans chacun des bourrelets des boucles. On obtient ainsi une structure de renfort de type carcasse. Par ailleurs, l'enroulement filaire est préférablement constitué d'un seul fil.

Le mélange de gomme de liaison de module d'élasticité sensiblement élevé assure une zone d'ancrage de la structure de type carcasse. Le module d'élasticité du mélange de gomme de liaison est avantageusement supérieur à 40 Mpa, et en général supérieur aux modules correspondant aux autres zones adjacentes du bourrelet comportant des mélanges présentant des caractéristiques différentes.

Selon une variante avantageuse, la structure de type carcasse forme un prolongement vers l'axe de rotation du pneumatique au-delà de la base desdites piles. Dans un tel cas, puisque le retournement de la structure de type carcasse n'est pas indispensable à des fins d'ancrage, le retournement peut être réalisé sans le jumelage avec des fils circonférentiels longeant la structure, et/ou sans que la portion retournée soit entièrement ou partiellement disposée dans une zone de mélange caoutchoutique à haut module.

Selon une autre variante avantageuse, le bourrelet intérieur prévu pour être disposé du côté interne de la roue et le bourrelet extérieur prévu pour être installé sur le côté externe de la roue, sont agencés de façon asymétrique. Ainsi par exemple, le nombre de piles ou le nombre de spires de chacune des piles peut être différent. Quelques exemples d'agencements asymétriques sont illustrés dans les figures, où par exemple le nombre de piles de fils dans le bourrelet côté intérieur est différent du nombre de piles de fils dans le bourrelet côté extérieur. Par exemple, le nombre de piles de fils dans le bourrelet côté intérieur est inférieur au nombre de piles de fils dans le bourrelet côté extérieur. L'inverse est également possible, en fonction des caractéristiques recherchées.

D'autres caractéristiques et avantages de l'invention apparaîtront à la lecture des exemples de réalisation du pneumatique conforme à l'invention, donnés à titre non limitatif et en se référant aux figures 1 à 9 annexées, dans lesquelles:
la figure 1 illustre, en coupe transversale, un pneumatique selon l'invention;
la figure 2 illustre, en coupe transversale agrandie, les bourrelets d'une première variante d'un pneumatique selon l'invention, où les piles de fils sont disposées d'un seul et même côté de la structure de renfort, dans cet exemple la portion axialement externe;
la figure 3 illustre, en coupe transversale agrandie, une autre variante de bourrelets, où la structure de renfort est intercalée entre une pile de fils disposée axialement à l'intérieur et deux ou trois piles de fils disposées axialement à l'extérieur par rapport à ladite structure;
la figure 4 illustre, en coupe transversale agrandie, une autre variante de bourrelets, où la structure de renfort est intercalée entre deux piles de fils disposées axialement à l'intérieur et une ou deux piles de fils disposées axialement à l'extérieur par rapport à ladite structure;
la figure 5 illustre, en coupe transversale agrandie, une variante de bourrelets sensiblement symétriques, où la structure de renfort est intercalée entre trois piles de fils disposées axialement à l'intérieur et une pile de fils disposée axialement à l'extérieur par rapport à ladite structure;
la figure 6 illustre, en coupe transversale agrandie, une autre variante de bourrelets, où les piles de fils sont disposées d'un seul et même côté de la structure de renfort, dans cet exemple la portion axialement interne;
la figure 7 illustre, en coupe transversale agrandie, les bourrelets gauche et droit du pneumatique de la figure 1;
les figures 8a à 8e illustrent l'évolution de la position d'un bourrelet selon l'invention sur la jante prévue pour réaliser l'assemblage, en fonction de la pression de gonflage;
la figure 9 présente deux courbes illustrant la rotation de la zone basse du pneumatique en fonction de la pression de gonflage.

Dans la présente description, le terme "fil" désigne en toute généralité aussi bien des monofilaments que des multifilaments ou des assemblages comme des câbles, des retors ou encore tout type d'assemblage équivalent, et ceci, quels que soient la matière et le traitement de ces fils. Il peut s'agir par exemple de traitements de surface, enrobage ou pré-encollage pour favoriser l'adhérence sur le caoutchouc.

D'autre part, on entend par structure radiale, un agencement à 90 degrés, mais aussi, selon l'usage, à un angle proche de 90°.

On sait que, de façon traditionnelle, la ou les nappes de carcasse sont retournées autour d'une tringle. La tringle remplit alors une fonction d'ancrage de la carcasse. Ainsi, notamment, elle supporte la tension se développant dans les fils de carcasse par exemple sous l'effet de la pression de gonflage. L'agencement décrit dans le présent document permet d'assurer une fonction similaire d'ancrage.

Il est également connu d'utiliser la tringle de type traditionnel pour assurer une fonction de serrage du bourrelet sur une jante. L'agencement décrit dans le présent document permet également d'assurer un rôle similaire de serrage.

Dans la présente description, on entend par "gomme de liaison" le mélange caoutchoutique éventuellement en contact avec les fils de renforcement, adhérant à ceux-ci et susceptible de remplir les interstices entre fils adjacents.

On entend par "contact" entre un fil et une couche de gomme de liaison le fait qu'au moins une partie de la circonférence extérieure du fil est en contact intime avec le mélange caoutchoutique constituant de la gomme de liaison.

On désigne "flancs" les portions du pneumatique le plus souvent de faible rigidité de flexion situées entre le sommet et les bourrelets. On appelle "mélange flancs" les mélanges caoutchoutiques situés axialement extérieurement relativement aux fils de la structure de renforcement de la carcasse et à leur gomme de liaison. Ces mélanges ont habituellement un bas module d'élasticité.

On appelle "bourrelet" la portion du pneumatique adjacente radialement intérieurement au flanc.

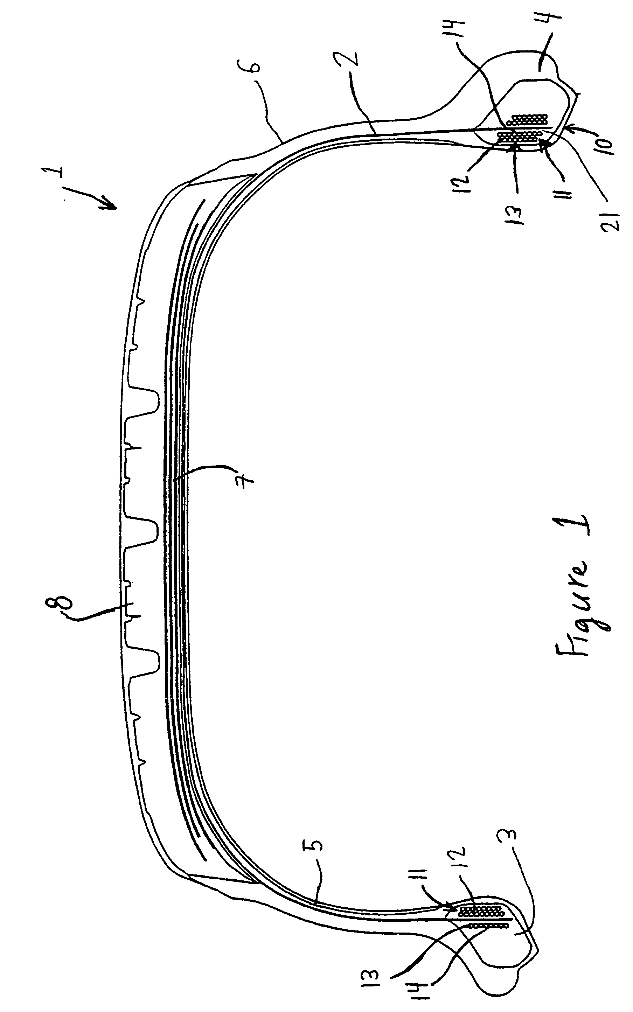

La figure 1 illustre, en coupe transversale, un pneumatique 1 selon l'invention. Ce pneumatique comprend un premier flanc 5 adjacent à un premier bourrelet 3 correspondant de préférence au bourrelet intérieur. De façon similaire, la portion opposée du pneumatique comprend un second flanc 6 adjacent à un second bourrelet 4. Un sommet 7, sur lequel est prévue une bande de roulement 8, assure la jonction entre les flancs. Le sommet comprend avantageusement au moins une ceinture de renfort.

Le pneumatique comporte une structure de renfort 2, comme par exemple une carcasse, pourvue de renforts avantageusement configurés selon un agencement sensiblement radial. Cette structure peut être agencée de façon continue d'un bourrelet à l'autre, en passant par les flancs et le sommet, ou encore, elle peut comporter deux ou plusieurs parties, agencées par exemple le long des flancs, sans couvrir la totalité du sommet.

Les portions d'extrémité de la structure de renfort 2 coopèrent avec les bourrelets. Il se crée ainsi un ancrage de ces portions dans les dits bourrelets de manière à assurer l'intégrité du pneumatique.

La structure de renfort 2 est de préférence réalisée par enroulement d'un seul fil faisant des aller-retours entre les deux bourrelets en formant dans chacun des bourrelets des boucles. Ces boucles, enrobées dans le mélange de gomme à haut module, contribuent à la liaison mécanique entre la structure de renfort 2 et le bourrelet, notamment les piles 13. Par la présence de boucles entre le parcours "aller" et le "retour" du fil, on voit que le renforcement est de type monofilament. Bien entendu, la carcasse pourrait ne pas être fabriquée de façon continue à partir d'un seul fil, et il pourrait ne pas y avoir de boucles, mais par exemple des extrémités coupées.

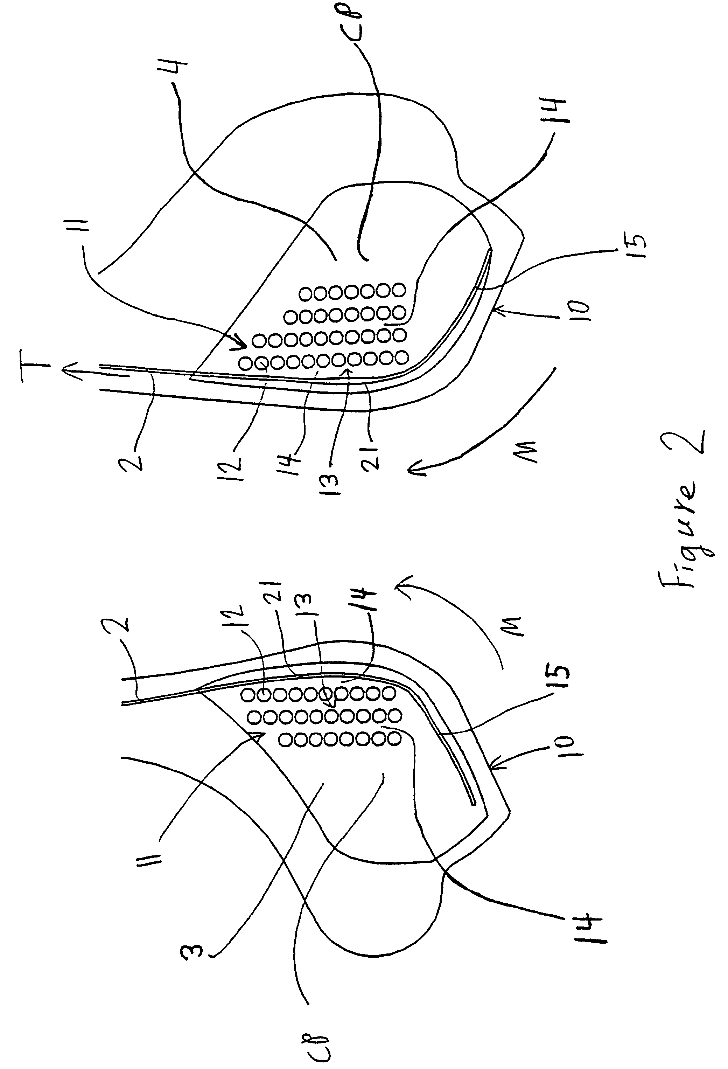

Tel qu'illustré à la figure 2, des fils circonférentiels 12 agencés de préférence sous forme de piles 13, forment un arrangement de fils 11, prévu dans chacun des bourrelets 3 et 4. Ces fils sont de préférence métalliques. Une partie ou la totalité des fils peut également être réalisée en matériaux textiles ou autres.

Au moins un fil 12 d'une des piles 13 est de préférence disposé à proximité immédiate d'une portion d'extrémité 21 de la structure de renfort 2. Les piles peuvent également être agencées de façon à ce qu'une portion d'extrémité 21 soit intercalée entre des piles 13.

L'espace entre les fils 12 et la structure de renfort 2 est occupé par un mélange de gomme de liaison 14. On peut également prévoir l'utilisation de plusieurs mélanges ayant des caractéristiques différentes, délimitant plusieurs zones, les combinaisons de mélanges et les agencements résultants étant quasi-illimités. Il est toutefois avantageux de prévoir la présence d'un mélange de gomme à haut module d'élasticité dans la zone d'intersection entre l'arrangement de fils 11 et la structure de renfort 2. A titre d'exemple non limitatif, le module d'élasticité d'une telle gomme peut être supérieur à 20 Mpa ou peut même atteindre, voire dépasser 40 Mpa.

Les arrangements de fils 11 peuvent être agencés et fabriqués différemment. Par exemple, une pile 13 peut avantageusement être constituée d'un seul fil 12, enroulé (sensiblement à zéro degrés) en spirale, de préférence depuis le plus petit diamètre vers le plus grand diamètre. Une pile peut également être constituée de plusieurs fils concentriques posés l'un dans l'autre.

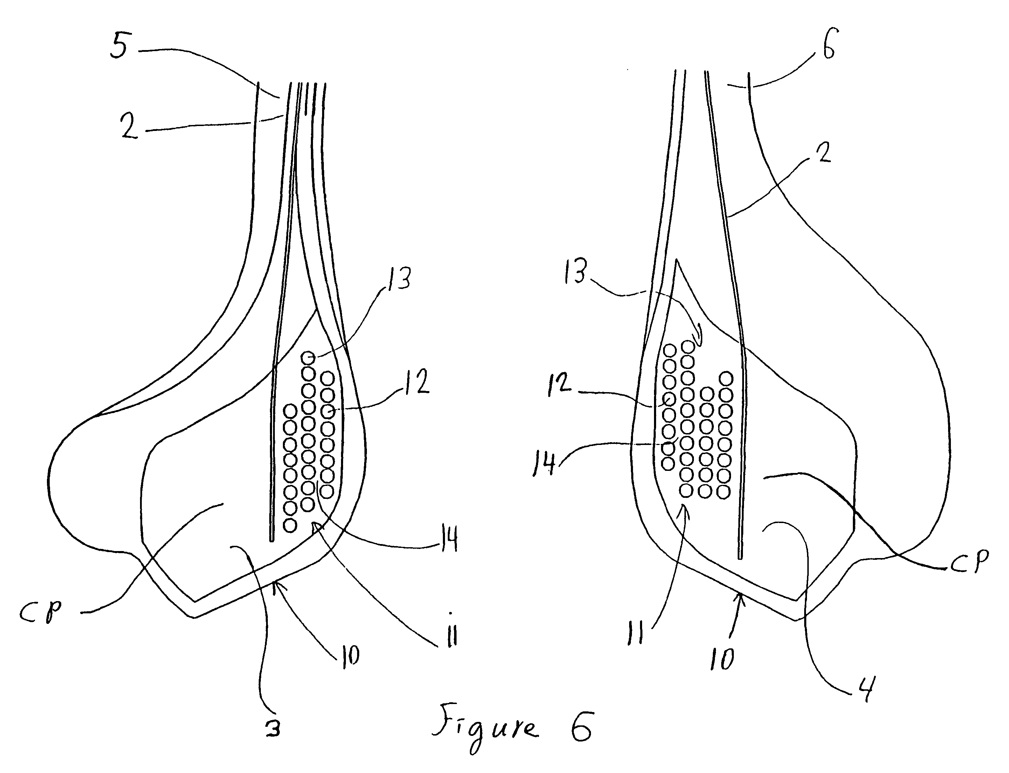

La position des piles peut varier selon une quasi-infinité de possibilités. Quelques exemples non limitatifs sont illustrés et décrits dans la présente description. La base des piles (portion radialement intérieure) peut être sensiblement co-radiale (alignée radialement), tel qu'illustré à la figure 2, ou être décalée par exemple de façon à ce que l'ensemble des premiers fils de chaque pile forme un alignement présentant un angle donné par rapport à l'axe de rotation du pneumatique. Le bourrelet de gauche de la figure 6 illustre un cas (non limitatif) où l'alignement formé est sensiblement parallèle au siège du bourrelet.

De façon surprenante, il a été constaté que l'ancrage de la structure de renfort dans le bourrelet peut être réalisé par le type d'interface décrite, malgré le fait que dans le pneumatique à mobilité étendue selon l'invention, les forces induites au niveau du bourrelet diffèrent de celles d'un bourrelet de type classique. Par exemple, avec le pneumatique selon l'invention, une augmentation de pression occasionne une augmentation de la poussée radiale du siège du bourrelet contre le siège de la jante.

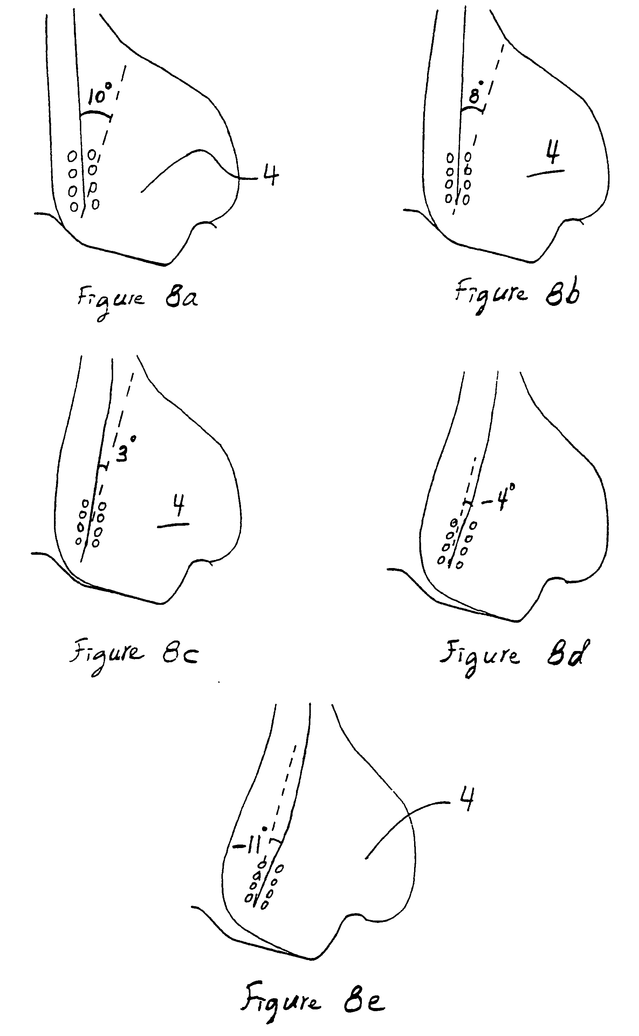

Les figures 8a à 8e illustrent l'évolution de la position angulaire de la zone basse d'un pneumatique et notamment de la zone d'ancrage d'un bourrelet par rapport à sa géométrie initiale non monté et non gonflé. On observe que plus la pression augmente, plus la portion axialement extérieure du siège appuie contre le siège de la jante. La figure 8a illustre l'ensemble non gonflé, à zéro bar. L'angle de positionnement est d'environ 10°. La figure 8b illustre l'ensemble gonflé à un bar. L'angle de positionnement est alors d'environ 8°. La figure 8c illustre l'ensemble gonflé à trois bars. L'angle de positionnement est alors d'environ 3°. La figure 8d illustre l'ensemble gonflé à six bars. L'angle de positionnement est alors d'environ -4°. La figure 8e illustre l'ensemble gonflé à huit bars. L'angle de positionnement est alors d'environ -10°.

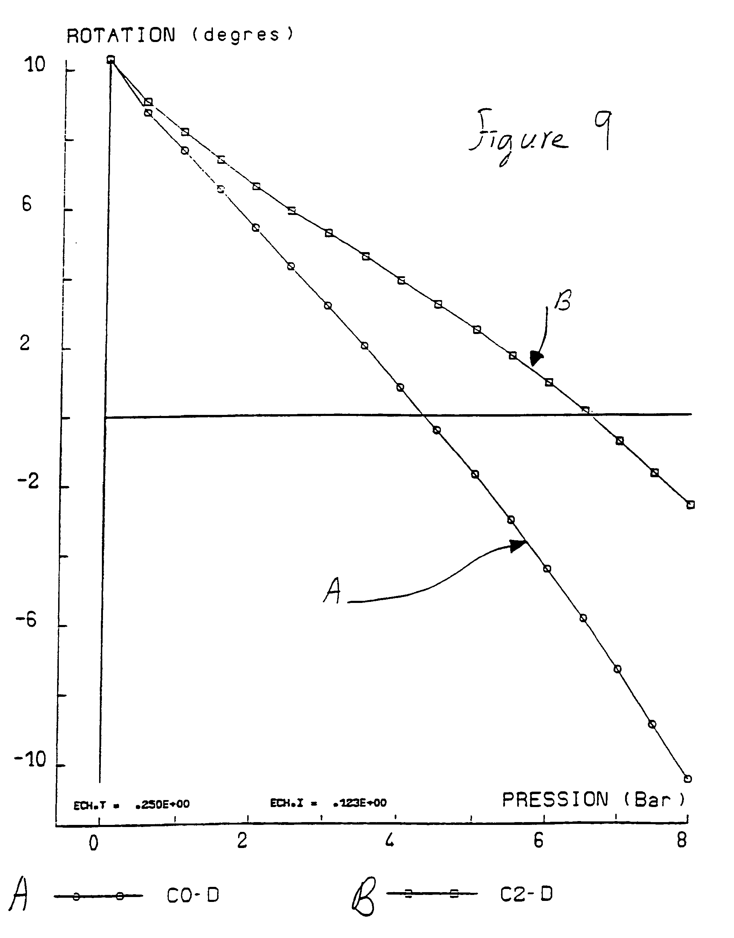

La figure 9 présente deux courbes illustrant la rotation de la zone basse du pneumatique en fonction de la pression de gonflage. La courbe A correspond à une architecture où toutes les piles de fils sont disposées axialement extérieurement à la structure de renfort de type carcasse. La courbe B correspond à une architecture où deux des piles de fils sont disposées axialement intérieurement par rapport à la structure de renfort de type carcasse. La courbe A correspond donc à un exemple où la structure de renfort est axialement plus vers l'intérieur que dans l'exemple correspondant à la courbe B. L'effet bras de levier, par exemple par rapport au centre de pression CP, est plus important dans le premier exemple. On constate par ailleurs que les résultats sur la rotation de la zone basse diffèrent dans ces deux exemples de sorte qu'une architecture où la structure de renfort est axialement plus vers l'intérieur, donc avec un plus grand bras de levier, confère plus de rotation à la zone basse du pneumatique, les autres paramètres tels que les dimensions, constituants, etc., étant bien entendus similaires dans les deux exemples. Ainsi, la courbe B de la figure 9 présente une rotation moins importante que la courbe A, pour une même variation de pression de gonflage.

Ces essais ont permis de constater qu'il est possible de moduler le niveau de rotation de la zone basse du pneumatique en utilisant divers types d'architectures où les positions relatives des fils et/ou de la structure de renfort varient les unes par rapport aux autres ou encore par rapport à un point donné du bourrelet comme par exemple le centre de pression CP.

En faisant la corrélation entre le graphique de la figure 9 et les diverses positions illustrées à la figure 8, on constate qu'à pression nulle ou faible la pression est surtout concentrée sur la portion axialement interne du siège; plus la pression augmente à l'intérieur du pneumatique, plus les efforts exercés sur cette portion axialement à l'intérieur du siège diminuent et se déplacent vers une zone axialement plus à l'extérieur du bourrelet. A partir d'une certaine valeur de la pression du pneumatique, les efforts exercés dans les deux zones s'équivalent, puis les efforts exercés dans la zone axialement à l'extérieur peuvent devenir plus importants que ceux exercés axialement à l'intérieur.

Pendant ce transfert, il est possible que la pression exercée contre le rebord externe de jante augmente également.

Différents essais effectués avec différentes configurations ont permis de mettre en évidence le fait que ce phénomène de transfert des efforts, ou encore rotation de la zone basse, est dû d'une part à l'augmentation de la pression dans le pneumatique qui crée une force agissant axialement vers l'extérieur et agissant contre le flanc et le bourrelet, et d'autre part par l'augmentation de la tension dans la structure de renfort consécutive à l'augmentation de la pression dans le pneumatique.

Le pneumatique selon l'invention est particulièrement adapté pour être utilisé sur une jante du type de celle décrite dans le document EP 0 673 324. Une telle jante comporte un siège et de préférence un rehaussement ou rebord situé axialement et radialement vers l'extérieur. La qualité du contact ou de l'appui du bourrelet sur le siège est particulièrement importante. Un des moyens selon l'invention utilisés pour l'améliorer consiste à optimiser le phénomène préalablement décrit de rotation de la zone basse du bourrelet.

Ce phénomène découle de la structure du bourrelet utilisé. La position axiale de la structure de renfort 2 par rapport au centre de poussée CP du bourrelet peut, dans une certaine mesure, influencer le moment M créé par une force de tension T induite dans la structure de renfort. Ce moment M agit sur l'effet de rotation de la zone basse du bourrelet.

Grâce au phénomène de rotation de la zone basse du bourrelet, ces derniers, notamment au niveau des sièges, appuient davantage sur la face d'appui correspondante des jantes, ce qui permet d'augmenter la cohésion au niveau de l'interface jante/pneumatique. Cet aspect est particulièrement important, par exemple lorsqu'un véhicule effectue des virages serrés ou encore des virages à haute vitesse. Ces caractéristiques contribuent donc à améliorer la sécurité de l'ensemble pneumatique/jante et donc du véhicule.

Entre autres, le choix de l'une ou l'autre des variantes illustrées aux figures 2 à 6 permet d'influencer le phénomène de rotation de la zone basse des bourrelets.

Ces figures illustrent quelques exemples d'agencement de la structure de renfort 2 par rapport aux piles 13 de fils. Ainsi, à la figure 2, les piles de fils sont disposées d'un seul et même côté de la structure de renfort 2, dans cet exemple la portion axialement externe.

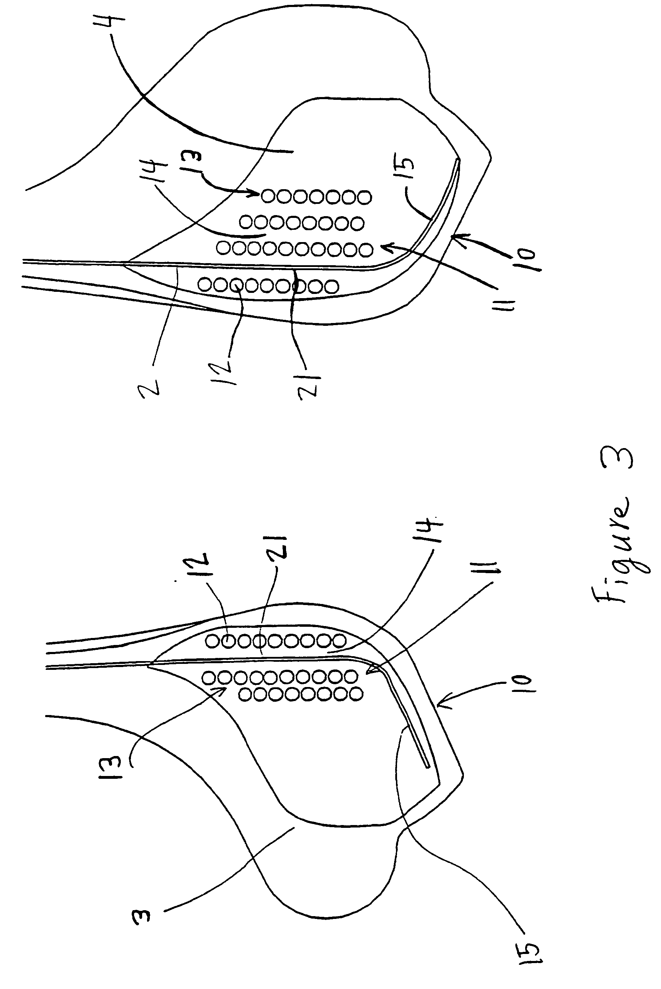

La figure 3 présente une variante où la structure de renfort 2 est intercalée entre une pile 13 de fils 12 disposée axialement à l'intérieur et trois piles 13 de fils 12 disposées axialement à l'extérieur par rapport à ladite structure 2 dans le bourrelet 4, et deux piles 13 de fils 12 disposées axialement à l'extérieur par rapport à ladite structure 2 dans le bourrelet 3.

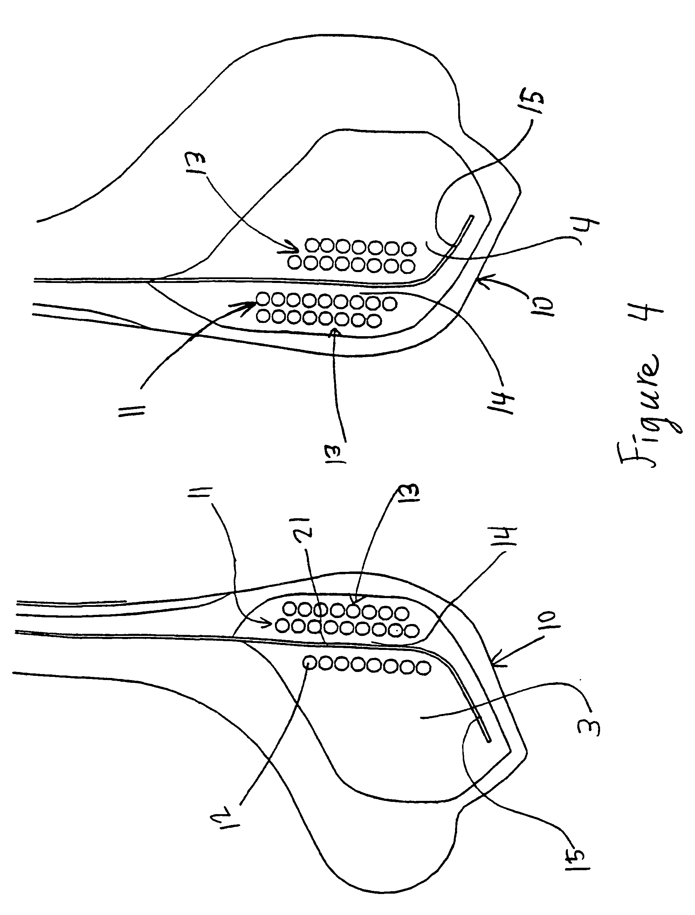

La figure 4 présente une variante où la structure de renfort 2 est intercalée entre deux piles 13 de fils 12 disposées axialement à l'intérieur et deux piles 13 de fils 12 disposées axialement à l'extérieur par rapport à ladite structure 2 dans le bourrelet 4, et une pile 13 de fils 12 disposée axialement à l'extérieur par rapport à ladite structure 2 dans le bourrelet 3.

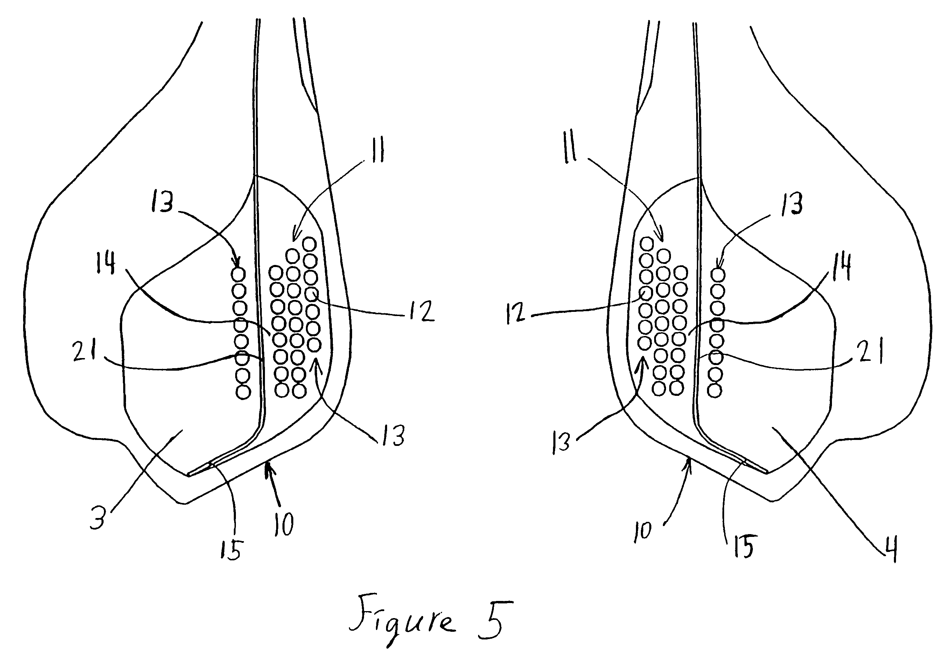

La figure 5 présente une variante où la structure de renfort 2 est intercalée entre trois piles 13 de fils 12 disposées axialement à l'intérieur et une pile 13 de fils 12 disposée axialement à l'extérieur par rapport à ladite structure 2.

La figure 6 présente une autre variante où les piles de fils sont disposées d'un seul et même côté de la structure de renfort 2, dans cet exemple la portion axialement interne.

Ces exemples dont donnés uniquement à titre illustratif: d'autres variantes avec par exemple plus ou moins de piles comportant éventuellement des nombres différents de fils peuvent être utilisés.

Ces différentes variantes d'exécution procurent différents effets mécaniques au niveau des bourrelets, de l'ancrage de la structure de renfort et par conséquent, au niveau de l'interface jante/pneumatique. Ainsi, avec une variante du type de celle montrée à la figure 2, le bras de levier entre la structure 2 et le centre de poussée est grand, procurant un moment M important. A l'inverse, dans une variante du type de celle montrée à la figure 6, le bras de levier est plutôt court, ce qui limite la valeur du moment M. Celui-ci aura donc une valeur plus faible dans le second cas que dans le premier. La géométrie ou l'agencement de la gomme de liaison 14 peut également influencer le phénomène de rotation de la zone basse.

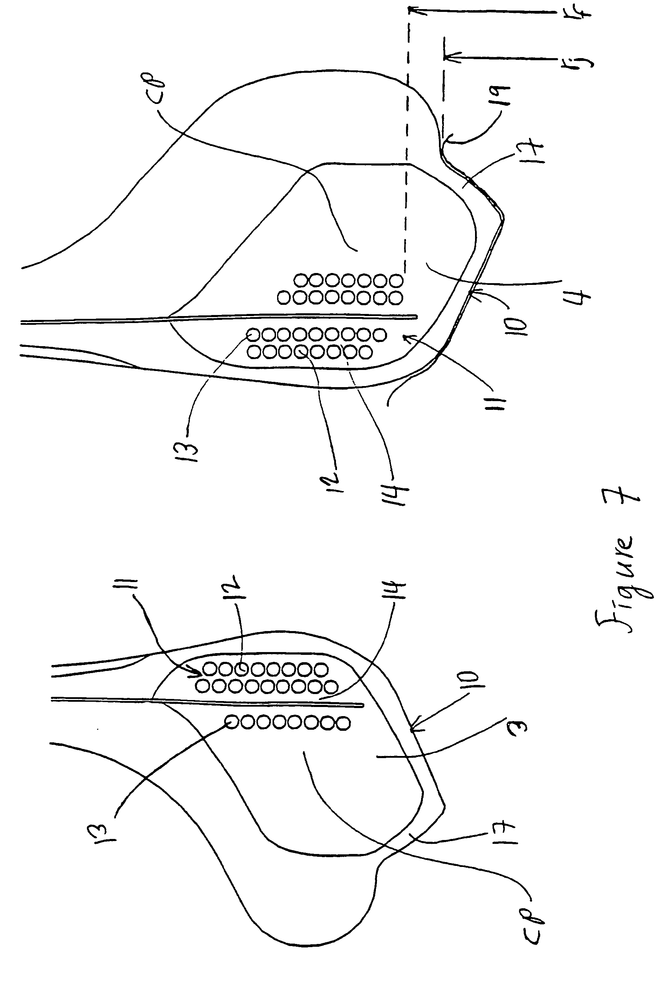

La figure 7 illustre un exemple d'agencement selon un autre aspect de l'invention. Etant donné la présence probable d'une saillie ou rebord sur la jante, susceptible d'appuyer contre la zone extérieure d'appui du bourrelet, la rotation de la zone basse entraînera une force de réaction R provenant de cette saillie. Pour faciliter la rotation ou permettre que celle-ci soit plus importante, il est préférable de limiter cette force de réaction R. Pour ce faire, on prévoit sur le bourrelet une zone tampon entre la zone de mélange à haut module et le rebord de la jante. Cette zone d'écrasement 17 (figure 7) est constituée d'un matériau plus souple que celui étant généralement situé dans la zone d'interface entre l'arrangement 11 de fils et la structure de renfort 2. Tel que décrit préalablement, sous l'effet combiné de la pression du pneumatique et d'une tension T agissant sur la structure 2, le moment M ainsi créé agit de façon à écraser la zone 17, favorisant de ce fait la rotation de la zone basse du bourrelet.

Cette zone d'écrasement 17 se situe de préférence le long du profil axial extérieur du bourrelet prévu pour être disposé adjacent au rebord de jante. Par exemple, la zone 17 peut se situer, telle qu'illustrée à la figure 7, entre la portion radialement extérieure sensiblement adjacente à la pointe radialement inférieure du bourrelet en se prolongeant axialement et radialement vers l'extérieur, de façon à constituer le contour externe de la portion du bourrelet susceptible de longer le rebord de jante.

Le module d'élasticité du mélange utilisé dans cette zone peut être compris par exemple entre 10 et 40 Mpa, mais de préférence inférieur à 20 Mpa. On entend par "module d'élasticité" d'un mélange caoutchoutique, un module d'extension sécant obtenu à une déformation d'extension uniaxiale de l'ordre de 10% à température ambiante.

Les bases des piles (les fils radialement les plus près de l'axe de rotation du pneumatique) sont de préférence disposées radialement plus à l'extérieur que l'extrémité dudit rebord (portion axialement et radialement la plus à l'extérieur dudit rebord) tel qu'illustré par exemple à la figure 7. Les bases des piles sont avantageusement prévues de façon à être disposées radialement extérieurement par rapport au rebord de la jante 19 adaptée au pneumatique. Les opérations de montage/démontage sont alors facilitées. Ainsi, à la figure 7, on constate que r_{f} (rayon des premiers fils) est supérieur à rⱼ (rayon du rebord ou crochet de jante).

La zone d'interface entre la structure de renfort 2 et l'arrangement de fils 11 peut être prévue de manière à ce que la structure de renfort 2 s'interpose entre ou près des piles 13, avec la portion d'extrémité 21 de la structure 2 se trouvant dans une position radiale donnée quelque part le long d'une des piles, ou encore près de la base d'une pile, mais sans dépasser significativement la base des piles dans la direction de l'axe de rotation du pneumatique.

Autrement, selon un autre aspect de l'invention, la portion d'extrémité 21 se trouve radialement plus près de l'axe de rotation du pneumatique que la base des piles 13, créant ainsi un prolongement 15 de la structure de renfort 2 au-delà de la base des piles 13. Les figures 2 à 6 illustrent des exemples de tels prolongements 15. Le prolongement 15 peut alors prendre une multiplicité d'agencements, comme par exemple un alignement sensiblement parallèle au siège 10, un alignement sensiblement parallèle à l'axe de rotation du pneumatique, etc.

Selon une autre variante, la portion d'extrémité 21 forme un retournement autour de la pile ou vers la pile axialement extérieure ou encore entre deux piles de préférence autres que celles par lesquelles la structure 2 entre dans le bourrelet.

La longueur du prolongement 15 peut varier entre quelques millimètres jusqu'à plusieurs centimètres.

Les figures 1, 2, 3, 4, 6 et 7 illustrent un autre aspect de l'invention, selon lequel les piles 13 de fils 12 sont agencées, dans les deux bourrelets, de façon asymétrique. Ce type d'agencement est particulièrement avantageux pour un pneumatique comportant des bourrelets non identiques, soit en raison de leurs formes, leurs profils, leurs dimensions, leurs matériaux constituants, leur écart moyen par rapport à l'axe de rotation du pneumatique, etc.

Le document EP 0 673 324 illustre un exemple d'un tel pneumatique. En effet, étant utilisé sur une jante comportant un profil non symétrique et le profil des bourrelets étant adapté à ce profil, ce dernier est asymétrique.

Par ailleurs, en raison de la position du pneumatique sur un véhicule, les deux bourrelets n'ont pas à subir les mêmes niveaux de forces et de contraintes. Souvent, le bourrelet du côté extérieur du pneumatique est le plus sollicité. Il est donc préférable d'optimiser son agencement afin qu'il puisse supporter des niveaux élevés de contraintes. Puisque le bourrelet radialement à l'intérieur 3 n'a en général pas à subir de niveaux de contraintes aussi élevés, sa structure peut être simplifiée.

Dans l'exemple de réalisation illustré à la figure 1, le premier bourrelet 3 comporte trois piles 13 de fils, tandis que le second bourrelet 4 en comporte quatre. La réalisation du premier bourrelet nécessite donc moins de matériaux et moins d'étapes de fabrication. Ce type d'architecture est donc plus économique.

Pour tenir compte d'un maximum de contraintes physiques et mécaniques, non seulement le nombre de piles de fils, mais également le nombre de fils par pile, la nature ou le matériau des fils, l'agencement des types de gommes entre elles, la forme du bourrelet, etc., peuvent varier d'un bourrelet à l'autre.

Non seulement peut-on ainsi contribuer à réduire les coûts du produit fini, mais on peut également optimiser les structures de chacun des bourrelets 3 et 4 en fonction de leurs spécificités respectives, ce qui n'est pas possible sur un profil symétrique. Dans ce dernier cas, l'agencement unique appliqué aux deux bourrelets constitue la plupart du temps un compromis prenant en considération, dans la mesure du possible, les propriétés parfois contradictoires recherchées pour chacun des bourrelets.

Les différents exemples de réalisations décrites et/ou illustrées peuvent avantageusement être réalisées avec des dispositifs du type de ceux décrits dans le document EP 0 580 055.

Ainsi par exemple, il est très avantageux de confectionner le pneumatique sur un noyau rigide imposant la forme de sa cavité intérieure. On applique sur ce noyau, de préférence dans l'ordre requis par l'architecture finale, tous les constituants du pneumatique, qui sont disposés directement à leur place finale, selon un profil sensiblement final. Dans ce cas, un tel pneumatique peut être moulé et vulcanisé comme exposé dans le document US 4 895 692.

## Revendications

1. Pneumatique pour roue de véhicule, comprenant:
- deux flancs (5, 6) espacés axialement l'un de l'autre, réunis à leurs portions radialement extérieures par une zone de sommet (7) pourvue sur sa portion radialement extérieure d'une bande de roulement (8) circonférentielle,
- des bourrelets (3, 4), disposés radialement intérieurement à chacun des flancs, au moins un bourrelet comportant un siège et un rebord externe destinés à venir en contact avec la jante, le siège ayant une génératrice dont l'extrémité axialement intérieure est sur un cercle de diamètre supérieur au diamètre du cercle sur lequel se trouve l'extrémité axialement extérieure,
- une structure de renfort (2) s'étendant sensiblement radialement depuis chacun des bourrelets, le long des flancs, vers la zone sommet, **caractérisé en ce que** ladite structure de renfort coopère uniquement dans ledit au moins un bourrelet avec un arrangement sensiblement radial de fils circonférentiels (1) disposés en piles (13), une portion de la structure de renfort de type carcasse étant agencée à proximité immédiate d'au moins une portion d'une pile, l'espace entre ces portions étant sensiblement occupé par un mélange caoutchoutique (14) à haut module d'élasticité, ledit arrangement sensiblement radial de fils circonférentiels étant disposé axialement intérieurement par rapport au centre de pression.

2. Pneumatique pour roue de véhicule selon la revendication 1, dans lequel une zone d'interface est constituée par une portion de la structure de renfort (2) et au moins une pile (13), ladite zone étant sensiblement noyée dans un mélange de gomme (14) à haut module.

3. Pneumatique pour roue de véhicule selon l'une des revendications 1 ou 2, dans lequel le rebord externe, axialement extérieur au siège, comporte une génératrice sensiblement rectiligne inclinée par rapport à l'axe de rotation du pneumatique d'un angle compris entre 30° et 85°, mesuré depuis cet axe.

4. Pneumatique pour roue de véhicule selon l'une des revendications 1 à 3, dans lequel ledit arrangement sensiblement radial de fils circonférentiels (11) est disposé en au moins une pile (13), la totalité des piles étant disposée du côté axialement externe par rapport à la structure de type carcasse (2).

5. Pneumatique pour roue de véhicule selon l'une des revendications 1 à 3, dans lequel ledit arrangement sensiblement radial de fils circonférentiels (11) est disposé en au moins une pile (13), la totalité des piles étant disposée du côté axialement interne par rapport à la structure de type carcasse (2).

6. Pneumatique pour roue de véhicule selon l'une revendications 1 à 3, dans lequel ledit arrangement sensiblement radial de fils circonférentiels (11) est disposé en au moins deux piles (13), les piles étant disposées de part et d'autre par rapport à la structure de type carcasse (2).

7. Pneumatique pour roue de véhicule selon l'une des revendications 2 à 6, dans lequel ladite zone d'interface englobe généralement les piles (13) et la portion de structure de renfort (2) adjacente.

8. Pneumatique pour roue de véhicule selon l'une des revendications précédentes, dans lequel la structure de renfort (2) est constituée d'un enroulement filaire faisant des allers retours entre les deux bourrelets en formant dans chacun des bourrelets des boucles.

9. Pneumatique pour roue de véhicule selon la revendication 8, dans lequel ledit enroulement filaire est constitué d'un seul fil.

10. Pneumatique pour roue de véhicule selon l'une des revendications précédentes, dans lequel ledit mélange de gomme de liaison (14) à haut module d'élasticité forme une zone d'ancrage de la structure de type carcasse dans le bourrelet.

11. Pneumatique pour roue de véhicule selon l'une des revendications précédentes, dans lequel le module d'élasticité dudit mélange de gomme à haut module d'élasticité est supérieur à 20 Mpa et de préférence supérieur à 40 Mpa.

12. Pneumatique pour roue de véhicule selon l'une des revendications précédentes, dans lequel la structure de type carcasse (2) forme un prolongement vers l'axe de rotation du pneumatique au-delà de la base desdites piles.

13. Pneumatique pour roue de véhicule selon la revendication 12, dans lequel ledit prolongement est sensiblement parallèle audit siège.

14. Pneumatique pour roue de véhicule selon la revendication 12, dans lequel ledit prolongement est sensiblement parallèle à au moins une des piles adjacentes.

15. Pneumatique pour roue de véhicule selon la revendication 12 dans lequel ledit prolongement est orienté sensiblement radialement.

16. Pneumatique pour roue de véhicule selon la revendication 12, dans lequel ledit prolongement comporte une portion en forme de retournement au moins partiel autour des piles axialement extérieures.

17. Pneumatique pour roue de véhicule selon l'une des revendications précédentes, dans lequel le nombre de piles (13) de fils dans le bourrelet côté intérieur est différent du nombre de piles de fils dans le bourrelet côté extérieur.

18. Pneumatique pour roue de véhicule selon la revendication 17, dans lequel le nombre de piles (13) de fils dans le bourrelet côté intérieur est inférieur au nombre de piles de fils dans le bourrelet côté extérieur.

19. Pneumatique pour roue de véhicule selon la revendication 17, dans lequel le nombre de piles (13) de fils dans le bourrelet côté intérieur est supérieur au nombre de piles de fils dans le bourrelet côté extérieur.

## Patentansprüche

1. Luftreifen für ein Kraftfahrzeugrad, der aufweist:
- zwei Flanken (5, 6), die axial voneinander beabstandet sind und in ihren radial äußeren Bereichen in einer Scheitelzone (7) zusammenlaufen, die an ihrem radial äußeren Ende mit einem umlaufenden Laufstreifen (8) versehen ist,
- Wülste (3, 4), die radial innen an jeder Flanke angeordnet sind, wobei mindestens ein Wulst einen Sitz und einen äußeren Rand aufweist, die dazu vorgesehen sind, mit einer Felge in Kontakt zu kommen, wobei der Sitz eine Erzeugende aufweist, deren axial inneres Ende auf einem Kreis liegt, dessen Durchmesser größer ist als der Durchmesser des Kreises, auf dem sich das axial äußere Ende befindet,
- eine Verstärkungsstruktur (2), die sich in etwa radial entlang der Flanken über den Scheitelbereich von einem Wulst zum anderen erstreckt, **dadurch gekennzeichnet, dass** die Verstärkungsstruktur in dem zumindest einen Wulst lediglich mit einer in etwa radialen Anordnung von umlaufenden Drähten (1), die in Stapeln (13) angeordnet sind, zusammenwirkt, wobei ein Teil der Verstärkungsstruktur vom Karkassentyp in unmittelbarer Nähe mindestens eines Teils eines Stapels angeordnet ist, der Raum zwischen den beiden Bereichen im Wesentlichen von einer Kautschukmischung (14) mit hohem Elastizitätsmodul eingenommen wird und die in etwa radiale Anordnung von umlaufenden Drähten in Bezug auf das Druckzentrum axial innen angeordnet ist.

2. Luftreifen für ein Kraftfahrzeugrad nach Anspruch 1, bei dem ein Grenzbereich aus einem Teil der Verstärkungsstruktur (2) und mindestens einem Stapel (13) besteht, wobei dieser Bereich im Wesentlichen in eine Kautschukmischung (15) mit hohem Modul eingebettet ist.

3. Luftreifen für ein Kraftfahrzeugrad nach einem der Ansprüche 1 oder 2, wobei der äußere Rand, axial außen am Sitz, eine in etwa gerade verlaufende Erzeugende aufweist, die in Bezug auf die Drehachse des Luftreifens in einem Winkel von 30 bis 85° geneigt ist, der von dieser Achse aus gemessen wird.

4. Luftreifen für ein Kraftfahrzeugrad nach einem der Ansprüche 1 bis 3, wobei die in etwa radiale Anordnung der umlaufenden Drähte (11) in mindestens einem Stapel (13) angeordnet ist, wobei alle Stapel in Bezug auf die Struktur vom Karkassentyp (2) auf der axial äußeren Seite angeordnet sind.

5. Luftreifen für ein Kraftfahrzeugrad nach einem der Ansprüche 1 bis 3, wobei die in etwa radiale Anordnung der umlaufenden Drähte (11) in mindestens einem Stapel (13) angeordnet ist, wobei alle Stapel in Bezug auf die Struktur vom Karkassentyp (2) auf der axial inneren Seite angeordnet sind.

6. Luftreifen für ein Kraftfahrzeugrad nach einem der Ansprüche 1 bis 3, wobei die in etwa radiale Anordnung der umlaufenden Drähte (11) in mindestens zwei Stapeln (13) angeordnet ist, wobei sich die Stapel in Bezug auf die Struktur vom Karkassentyp (2) auf beiden Seiten befinden.

7. Luftreifen für ein Kraftfahrzeugrad nach einem der Ansprüche 2 bis 6, wobei der Grenzbereich allgemein die Stapel (13) und den angrenzenden Bereich der Verstärkungsstruktur (2) umfasst.

8. Luftreifen für ein Kraftfahrzeugrad nach einem der vorhergehenden Ansprüche, bei dem die Verstärkungsstruktur (2) aus einer Drahtwicklung besteht, die zwischen den beiden Wülsten hin und her geführt ist und so in jedem Wulst Schlingen bildet.

9. Luftreifen für ein Kraftfahrzeugrad nach Anspruch 8, wobei die Drahtwicklung aus nur einem Draht besteht.

10. Luftreifen für ein Kraftfahrzeugrad nach einem der vorhergehenden Ansprüche, wobei die Verbindungsgurnmimischung (14) mit hohem Elastizitätsmodul in dem Wulst eine Verankerungszone für die Struktur vom Karkassentyp bildet.

11. Luftreifen für ein Kraftfahrzeugrad nach einem der vorhergehenden Ansprüche, wobei der Elastizitätsmodul der Verbindungsgummimischung über 20 MPa und vorzugsweise über 40 MPa liegt.

12. Luftreifen für ein Kraftfahrzeugrad nach einem der vorhergehenden Ansprüche, wobei die Struktur vom Karkassentyp (2) in Richtung der Drehachse des Luftreifens über die Grundfläche der Stapel hinaus eine Verlängerung bildet.

13. Luftreifen für ein Kraftfahrzeugrad nach Anspruch 12, wobei die Verlängerung in etwa parallel zum Sitz verläuft.

14. Luftreifen für ein Kraftfahrzeugrad nach Anspruch 12, wobei die Verlängerung in etwa parallel zu mindestens einem der angrenzenden Stapel verläuft.

15. Luftreifen für ein Kraftfahrzeugrad nach Anspruch 12, wobei die Verlängerung in etwa radial ausgerichtet ist.

16. Luftreifen für ein Kraftfahrzeugrad nach Anspruch 12, wobei die Verlängerung einen Bereich in Form eines zumindest partiell um die axial äußeren Stapel verlaufenden Hochschlags umfasst.

17. Luftreifen für ein Kraftfahrzeugrad nach einem der vorhergehenden Ansprüche, wobei die Zahl der Stapel (13) von Drähten in dem Wulst an der Innenseite von der Zahl der Stapel von Drähten in dem Wulst an der Außenseite verschieden ist.

18. Luftreifen für ein Kraftfahrzeugrad nach Anspruch 17, wobei die Anzahl der Stapel (13) von Drähten in dem innen liegenden Wulst kleiner ist als die Anzahl der Drahtstapel in dem außen liegenden Wulst.

19. Luftreifen für ein Kraftfahrzeugrad nach Anspruch 17, wobei die Anzahl der Stapel (13) an Drähten in dem innen liegenden Wulst größer ist als die Anzahl der Stapel von Drähten in dem außen liegenden Wulst.

## Claims

1. A tyre for a vehicle wheel, comprising:
- two sidewalls (5, 6) spaced apart axially from each other, joined at their radially outer portions by a crown zone (7) provided on its radially outer portion with a circumferential tread (8),
- beads (3, 4), arranged radially to the inside of each of the sidewalls, at least one bead comprising a seat and an outer flange which are intended to come into contact with the rim, the seat having a generatrix, the axially inner end of which lies on a circle of diameter greater than the diameter of the circle on which the axially outer end is located,
- a reinforcement structure (2) extending substantially radially from each of the beads, along the sidewalls, towards the crown zone, **characterised in that** said reinforcement structure cooperates solely in said at least one bead with a substantially radial arrangement of circumferential cords (1) arranged in stacks (13), a portion of the carcass-type reinforcement structure being arranged in the immediate vicinity of at least one portion of a stack, the space between these portions being substantially occupied by a rubber mix (14) of high elasticity modulus, said substantially radial arrangement of circumferential cords being arranged axially internally relative to the centre of pressure.

2. A tyre for a vehicle wheel according to Claim 1, in which an interface zone is formed by a portion of the reinforcement structure (2) and at least one stack (13), said zone being substantially embedded in a rubber mix (14) of high modulus.

3. A tyre for a vehicle wheel according to one of Claims 1 or 2, in which the outer flange, which is axially external to the seat, comprises a substantially rectilinear generatrix inclined relative to the axis of rotation of the tyre by an angle of between 30° and 85°, measured from this axis.

4. A tyre for a vehicle wheel according to one of Claims 1 to 3, in which said substantially radial arrangement of circumferential cords (11) is arranged in at least one stack (13), all the stacks being arranged on the axially outer side relative to the carcass-type structure (2).

5. A tyre for a vehicle wheel according to one of Claims 1 to 3, in which said substantially radial arrangement of circumferential cords (11) is arranged in at least one stack (13), all the stacks being arranged on the axially inner side relative to the carcass-type structure (2).

6. A tyre for a vehicle wheel according to one of Claims 1 to 3, in which said substantially radial arrangement of circumferential cords (11) is arranged in at least two stacks (13), the stacks being arranged on either side relative to the carcass-type structure (2).

7. A tyre for a vehicle wheel according to one of Claims 2 to 6, in which said interface zone generally covers the stacks (13) and the adjacent portion of reinforcement structure (2).

8. A tyre for a vehicle wheel according to one of the preceding claims, in which the reinforcement structure (2) is formed of a cord winding extending back and forth between the two beads, forming loops in each of the beads.

9. A tyre for a vehicle wheel according to Claim 8, in which said cord winding is formed of a single cord.

10. A tyre for a vehicle wheel according to one of the preceding claims, in which said bonding rubber mix (14) of high elasticity modulus forms an anchoring zone for the carcass-type structure in the bead.

11. A tyre for a vehicle wheel according to one of the preceding claims, in which the elasticity modulus of said rubber mix of high elasticity modulus is greater than 20 MPa, and preferably greater than 40 MPa.

12. A tyre for a vehicle wheel according to one of the preceding claims, in which the carcass-type structure (2) forms an extension towards the axis of rotation of the tyre beyond the base of said stacks.

13. A tyre for a vehicle wheel according to Claim 12, in which said extension is substantially parallel to said seat.

14. A tyre for a vehicle wheel according to Claim 12, in which said extension is substantially parallel to at least one of the adjacent stacks.

15. A tyre for a vehicle wheel according to Claim 12, in which said extension is oriented substantially radially.

16. A tyre for a vehicle wheel according to Claim 12, in which said extension comprises a portion in the form of an at least partial upturn about the axially outer stacks.

17. A tyre for a vehicle wheel according to one of the preceding claims, in which the number of stacks (13) of cords in the bead on the inner side is different from the number of stacks of cords in the bead on the outer side.

18. A tyre for a vehicle wheel according to Claim 17, in which the number of stacks (13) of cords in the bead on the inner side is less than the number of stacks of cords in the bead on the outer side.

19. A tyre for a vehicle wheel according to Claim 17, in which the number of stacks of cords (13) in the bead on the inner side is greater than the number of stacks of cords in the bead on the outer side.
